# EUROPÄISCHE PATENTSCHRIFT

(11) **EP 3 060 425 B1**
(45) Veröffentlichungstag und Bekanntmachung des Hinweises auf die Patenterteilung: **25.07.2018**
(21) Anmeldenummer: 14787148.7
(22) Anmeldetag: 17.10.2014
(51) Int. Cl.: B60N 2/20, B60N 2/225, B60N 2/22, B60N 2/02

(54) **ELEKTRISCH BETRIEBENER LEHNENVERSTELLER UND FAHRZEUGSITZ MIT EINEM SOLCHEN LEHNENVERSTELLER**
ELECTRICALLY OPERATED BACKREST ADJUSTER AND VEHICLE SEAT WITH SUCH A BACKREST ADJUSTER
DISPOSITIF DE RÉGLAGE DE DOSSIER À COMMANDE ÉLECTRIQUE ET SIÈGE DE VÉHICULE ÉQUIPÉ D'UN TEL DISPOSITIF DE RÉGLAGE DE DOSSIER

(30) Priorität: 23.10.2013 DE 102013221568; 29.04.2014 DE 102014208076
(43) Veröffentlichungstag der Anmeldung: 31.08.2016
(73) Patentinhaber: Adient Luxembourg Holding S.à r.l., 1855 Luxembourg (LU)
(72) Erfinder: MARKEL, Christian, 55232 Alzey (DE); CHRISTOFFEL, Thomas, 66909 Herschweiler-Pettersheim (DE); SCHMIDT, Michael, 66822 Lebach (DE); HEEG, Norbert, 66994 Dahn (DE)
(74) Vertreter: Finger, Catrin
(86) Internationale Anmeldenummer: PCT/EP2014/072340
(87) Internationale Veröffentlichungsnummer: WO 2015/059053

(56) Entgegenhaltungen:
- EP-A1- 2 196 110
- DE-A1-102010 048 682

## Beschreibung

Die Erfindung betrifft einen Lehnenversteller zur elektrisch betriebenen Verstellung einer Sitzlehne eines Fahrzeugsitzes und einen Fahrzeugsitz mit einem solchen elektrisch betriebenen Lehnenversteller sowie ein Montageverfahren eines solchen Lehnenverstellers.

Im Stand der Technik sind verschiedene Lehnenversteller mit Beschlägen zur manuellen oder elektrisch betriebenen Verstellung einer Sitzlehne eines Fahrzeugsitzes mit oder ohne Easy-Entry-Systeme bekannt, welche verschiedene Komfort- oder Gebrauchsstellungen der Sitzlehne bzw. einen erleichterten Einstieg in eine zweite Sitzreihe eines Fahrzeuges ermöglichen. Der Beschlag ist durch einen Entriegelungshebel, welcher üblicherweise an einer Rückenlehne des Fahrzeugsitzes angeordnet ist, betätigbar, wodurch die Rückenlehne des Fahrzeugsitzes in eine Komfortstellung bzw. aus einem Einstiegsbereich schwenkt. Ist der Fahrzeugsitz auf Schienen angeordnet, kann der Fahrzeugsitz bei Betätigung des Entriegelungshebels zusätzlich in Fahrtrichtung aus dem Einstiegsbereich heraus verschiebbar sein.

Das Dokument EP 2 196 110 A1 beschreibt einen Lehnenversteller zur Verstellung der Sitzlehne eines Fahrzeugsitzes mit einem internen Getriebe auf einer Getriebeplatte, die an einem Beschlagunterteil angeordnet ist. Der Lehnenversteller umfasst ein externes Getriebe, das an einem Beschlagoberteil angeordnet ist. Beidseitig des Fahrzeugsitzes angeordnete Beschlagseiten sind mittels einer Übertragungsstange gekoppelt. Auf einer der Beschlagseiten ist eine elektrische Antriebseinheit vorgesehen.

Das dem Oberbegriff entsprechende

Dokument DE 10 2010 048 682 A1 beschreibt einen Fahrzeugsitz mit einem elektrisch angetriebenen Verstellbeschlag, dessen erstes, festes Beschlagteil mit einem Sitzteilrahmen eines Sitzteiles und dessen zweites, verstellbares Beschlagteil mit einem Rückenlehnenrahmen einer Rückenlehne verbunden ist, wobei der Rückenlehnenrahmen um eine horizontale Klappachse gegenüber dem Sitzteilrahmen neigungsverstellbar und klappbar ist. Der Antrieb zum Klappen des Rückenlehnenrahmens weist eine Freilauffunktion auf, wodurch der Rückenlehnenrahmen aus einer Sitz-Position in eine Zwischenstellung klappbar ist, aus der er mittels des Antriebs in eine Gepäck-Position oder zurück in die Sitz-Position neigungsverstellbar ist.

Aufgabe der vorliegenden Erfindung ist es, einen verbesserten Lehnenversteller mit einem Beschlag mit einer elektrisch betriebenen Verstellung einer Sitzlehne und einen Fahrzeugsitz mit einem verbesserten Lehnenversteller anzugeben. Des Weiteren ist es Aufgabe der Erfindung, ein Verfahren zur Montage eines solchen Lehnenverstellers anzugeben.

Hinsichtlich des Lehnenverstellers und des Fahrzeugsitzes wird die Aufgabe erfindungsgemäß durch die im Patentanspruch 1 angegebenen Merkmale gelöst. Hinsichtlich des Verfahrens zur Montage eines solchen Lehnenverstellers wird die Aufgabe durch die im Patentanspruch 9 angegebenen Merkmale gelöst. Vorteilhafte Weiterbildungen der Erfindung sind Gegenstand der Unteransprüche.

Der erfindungsgemäße Fahrzeugsitz (3) gemäß Anspruch 1 mit einem elektrisch betriebenen Lehnenversteller, mit einem Sitzteil und einer relativ zum Sitzteil verstellbaren Sitzlehne, umfasst zwei Beschlagseiten,
- von denen jede ein sitzlehnenfestes Beschlagoberteil und ein an einem Unterbau befestigtes oder sitzteilfestes Beschlagunterteil umfasst, und
- von denen zumindest eine einen Beschlag zur Neigungsverstellung der Sitzlehne umfasst,
wobei der Beschlag zwischen dem Beschlagoberteil und dem Beschlagunterteil angeordnet ist und die Beschlagseiten mittels einer Übertragungsstange miteinander gekoppelt sind,
wobei auf einer der Beschlagseiten eine elektrische Antriebseinheit vorgesehen ist, die außen am zugehörigen Beschlagunterteil angeordnet ist und mit der Übertragungsstange zum Antrieb dieser gekoppelt ist.

Die Erfindung ermöglicht einen einfach aufgebauten elektrisch betriebenen Lehnenversteller, welcher insbesondere eine geringe Anzahl von Teilen aufweist, wobei eine Vielzahl dieser Teile Gleichteile sind, welche unabhängig vom zugrunde liegenden Fahrzeugsitztyp bei verschiedenartigen Fahrzeugsitzen verwendet werden können. Hierdurch ist ein besonders kostengünstiger elektrisch betriebener Lehnenversteller ermöglicht. Darüber hinaus kann der elektrisch betriebene Lehnenversteller als eine vorgefertigte Montageeinheit ausgebildet sein, die zur Nachrüstung oder Montage an bereits vorhandenen Fahrzeugsitzen geeignet ist.

Eine Ausgestaltung der Erfindung sieht vor, dass der Beschlag als Dreh- und/oder Rastbeschlag ausgebildet ist. Damit sind verschiedene Komfort- oder Gebrauchsstellungen der Sitzlehne bzw. ein erleichterter Einstieg in einen Fondbereich eines Fahrzeuges möglich.

Eine einfache Ausführungsform sieht vor, dass das Beschlagunterteil der antriebsseitigen Beschlagseite derart ausgebildet ist, dass dieses das Gehäuse für die elektrische Antriebseinheit bildet. Alternativ kann ein zusätzliches Gehäuseteil, insbesondere ein Gehäuseboden oder -deckel für die elektrische Antriebseinheit am Beschlagunterteil angeordnet sein. Erfindungsgemäß ist am Beschlagunterteil der antriebsseitigen Beschlagseite ein Aktuator/Aktor, insbesondere ein Stellelement, insbesondere ein Antriebssteller, angeordnet, der mit einer Betätigungseinheit, insbesondere einem Hebelelement, zur Entriegelung oder Verriegelung des Beschlags im Wirkzusammenhang steht.
Darüber hinaus ist am Beschlagunterteil der antriebsseitigen Beschlagseite ein Schaltelement, insbesondere ein Mikroschalter oder ein Stellungsgeber, angeordnet, der mit dem Hebelelement zur Bestimmung dessen Position im Wirkzusammenhang steht.
In einer möglichen Ausführungsform umfasst die elektrische Antriebseinheit einen Motor mit einer Antriebswelle und einem auf der Antriebswelle angeordneten Ritzel, insbesondere einem Antriebsrad, welches in Eingriff mit einem Anschlagselement, insbesondere einem Abtriebsrad, steht, das drehfest mit dem Beschlagoberteil und der Übertragungsstange verbunden ist. Dabei kann es sich bei dem Ritzel und dem Anschlagselement um eine Zahnradpaarung oder ein anderes Radgetriebe, wie ein Planetengetriebe handeln.
Ferner sieht eine Ausführungsform vor, dass das jeweilige Beschlagunterteil derart ausgebildet ist, das dieses an einer bodenfesten Komponente des Sitzteils und/oder an einem Unterbau form-, kraft- und/oder stoffschlüssig befestigt ist. Dazu korrespondierend ist das jeweilige Beschlagoberteil derart ausgebildet, dass dieses an einer Rahmenstruktur der Sitzlehne form-, kraft- und/oder stoffschlüssig befestigt ist. Das Beschlagoberteil und das Beschlagunterteil sind bei entriegeltem Beschlag relativ zueinander bewegbar, insbesondere drehbar, wozu der Beschlag als eine Getriebeverbindung, insbesondere als ein Zahnradgetriebe und/oder ein Planetenradgetriebe ausgebildet ist.

Eine bevorzugte Ausführungsform sieht vor, dass der elektrisch betriebene Lehnenversteller als eine vorgefertigte Montageeinheit ausgebildet ist, die zumindest die folgenden Komponenten umfasst: zwei Beschlagseiten, von denen jede ein Beschlagoberteil und ein Beschlagunterteil umfasst, und von denen zumindest eine einen Beschlag zur Neigungsverstellung der Sitzlehne umfasst, wobei der Beschlag zwischen dem Beschlagoberteil und dem Beschlagunterteil angeordnet ist und die Beschlagseiten mittels einer Übertragungsstange miteinander gekoppelt sind, und wobei auf einer der Beschlagseiten eine elektrische Antriebseinheit vorgesehen ist, die außen am zugehörigen Beschlagunterteil angeordnet ist und mit der Übertragungsstange zum Antrieb dieser gekoppelt ist.
Ein erfindungsgemäßer Fahrzeugsitz mit einer neigungseinstellbaren und frei schwenkbaren Sitzlehne weist den zuvor beschriebenen elektrisch betriebenen Lehnenversteller auf, der insbesondere als eine vorgefertigte Montageeinheit ausgebildet sein kann, die zur Nachrüstung oder Montage an bereits vorhandenen Fahrzeugsitzen geeignet ist.
Das erfindungsgemäße Verfahren zur Montage eines elektrisch betriebenen Lehnenverstellers umfasst gemäß Anspruch 9 folgende Schritte:
- Zusammenbau der zwei Beschlagoberteile und der diese verbindende Übertragungsstange,
- Aufsetzen und Befestigen des zumindest einen Beschlages an einer der Beschlagseiten auf einem aus dem betreffenden Beschlagoberteil hinausragenden Ende der Übertragungsstange,
- Aufsetzen und Anordnung der Beschlagunterteile auf die aus den Beschlägen hinausragenden Enden der Übertragungsstange,
- Aufsetzen und Befestigen einer Betätigungseinheit außen auf einer der Beschlagseiten an einem Beschlagunterteil,
- Montieren einer Antriebswelle mit einem Ritzel an diesem Beschlagunterteil, an welchem die Betätigungseinheit befestigt ist,
- Montieren und Befestigen einer elektrischen Antriebseinheit außen an diesem betreffenden Beschlagunterteil, insbesondere Montieren und Befestigen der zugehörigen Komponenten, wie eines Motors, eines Aktuators, eines Schaltelements.

Die Aufgabe wird des Weiteren erfindungsgemäß durch den o.g. Lehnenversteller mit einem Beschlag zur elektrisch betriebenen Verstellung einer Sitzlehne gelöst, wobei der Beschlag aus einem Beschlagoberteil, welches an der Rückenlehne angeordnet ist, und einem an einem Unterbau befestigten Beschlagunterteil gebildet ist. Dabei kann an jeweils einer Seite eines Fahrzeugsitzes ein solcher Beschlag angeordnet sein. Dabei ist der Beschlag zur Positionierung einer Sitzlehne eines Fahrzeugsitzes in eine Easy-Entry-Position, einer integrierten Komfortverriegelung zur Positionierung der Sitzlehne in mindestens eine Komfort- oder Sitzposition und einer erweiterten Komfortfunktion zur Positionierung der Sitzlehne über die Easy-Entry-Position hinaus in eine Ladebodenposition vorgesehen. Der Beschlag umfasst wenigstens ein Beschlagteil und einen Mitnehmer, der mit einem Komforthebel in Eingriff steht, wobei ein Schwenkbereich der Sitzlehne in der Easy-Entry-Position mittels einer in das zumindest eine Beschlagteil eingreifenden Easy-Entry-Klinke begrenzt ist, wobei der Mitnehmer zur Entriegelung des Beschlags mit einem Entriegelungshebel koppelbar ist und zur Positionierung der Sitzlehne aus der Easy-Entry-Position hinaus in die Ladebodenposition von dem Entriegelungshebel entkoppelbar ist, wobei im entkoppelten Zustand vom Mitnehmer und Entriegelungshebel dieser bei dessen Betätigung die Easy-Entry-Klinke mitnimmt.

Ausführungsbeispiele der Erfindung werden nachfolgend anhand von schematischen Figuren näher erläutert. Dabei zeigen:
- Figur 1: schematisch ein Ausführungsbeispiel für einen einseitig elektrisch betriebenen Lehnenversteller und ein Ablaufdiagramm zur Montage des Lehnenverstellers an einem Fahrzeugsitz,
- Figur 2: schematisch ein alternatives Ausführungsbeispiel für einen einseitig elektrisch betriebenen Lehnenversteller und ein Ablaufdiagramm zur Montage des alternativen Lehnenverstellers am Fahrzeugsitz,
- Figur 3: schematisch ein Ausführungsbeispiel für eine elektrische Antriebseinheit, die außen an einem Beschlagunterteil eines Lehnenverstellers nach Figur 2 angeordnet ist,
- Figur 4: schematisch den Lehnenversteller gemäß Figur 3 von innen im Bereich des Beschlagunterteils,
- Figur 5: schematisch ein Ausführungsbeispiel für einen als Rastbeschlag ausgebildeten Beschlag in Draufsicht,
- Figur 6A: schematisch in Explosionsdarstellung ein Ausführungsbeispiel für einen als Rastbeschlag ausgebildeten Beschlag eines Lehnenverstellers,
- Figur 6B: schematisch in perspektivischer Darstellung den Beschlag gemäß Figur 6A im zusammengebauten Zustand, und
- Figur 7: schematisch ein Ausführungsbeispiel für eine Anordnung einer elektrischen Antriebseinheit eines Lehnenverstellers nach Figur 2 in einem Gehäuse.

Einander entsprechende Teile sind in allen Figuren mit den gleichen Bezugszeichen versehen.

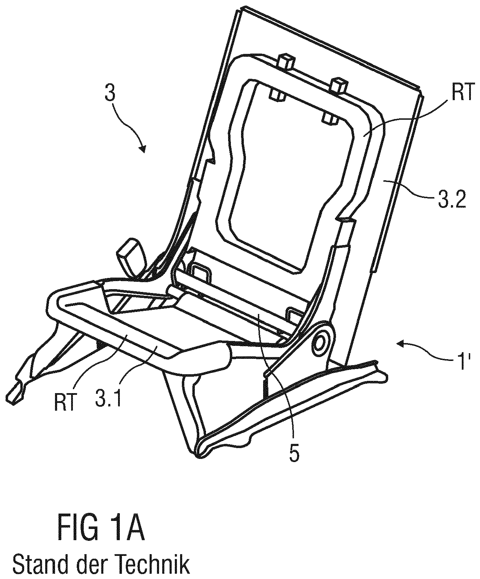

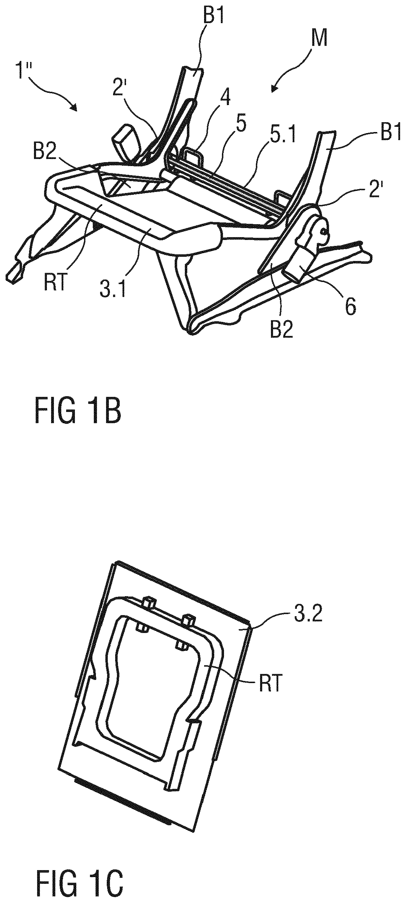

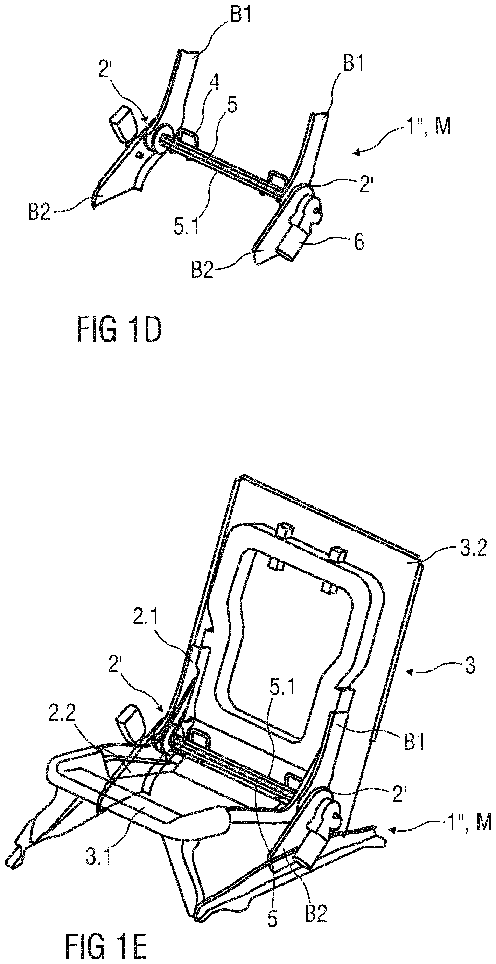

Die Figur 1 zeigt schematisch eine Teilfigur 1A mit einem herkömmlichen, manuell betätigbaren Lehnenversteller 1' für einen Fahrzeugsitz 3 nach dem Stand der Technik. Figur 1 umfasst darüber hinaus mehrere Teilfiguren 1B bis 1E mit einem Ablaufdiagramm zur Nachrüstung und Montage einer elektrischen Antriebseinheit 6 auf einen erfindungsgemäßen elektrisch betriebenen Lehnenversteller 1".
Der Fahrzeugsitz 3 umfasst ein Sitzteil 3.1 und eine schwenkbar an diesem anordenbare Sitzlehne 3.2 als Sitzkomponenten. In der Figur 1 sind das Sitzteil 3.1 und die Sitzlehne 3.2 ungepolstert dargestellt und somit deren Strukturbauteile, insbesondere Rahmenteile RT, gezeigt.

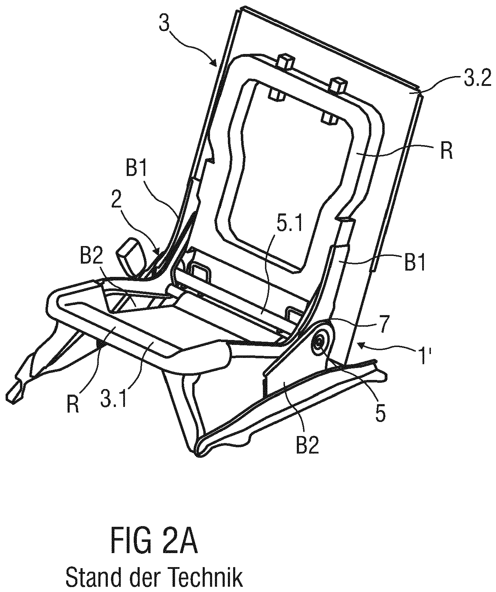

Der erfindungsgemäße Fahrzeugsitz mit elektrisch betriebenem Lehnenversteller 1" nach Figuren 1B bis 1E umfasst auf beiden Außenseiten zwei als Drehbeschläge 2' ausgebildete Beschläge für eine Neigungsverstellung und ein Freischwenken der Sitzlehne 3.2 relativ zum Sitzteil 3.1. Die beiden Drehbeschläge 2' sind mittels einer Übertragungsstange 5 miteinander drehbar gekoppelt. Alternativ kann nur eine der Außenseiten oder Beschlagseiten mit einem Drehbeschlag 2' versehen sein, die gegenüberliegende Beschlagseite ist dann als ein Drehlager 7 (in Figuren 2A bis 2E gezeigt) ausgebildet.
Zur elektrisch betriebenen Neigungsverstellung der Sitzlehne 3.2 relativ zum Sitzteil 3.1 umfasst der Lehnenversteller 1" die elektrische Antriebseinheit 6, die außen auf einer der Beschlagseiten des Lehnenverstellers 1" an der Übertragungsstange 5 angeordnet ist und dieses bei Bedarf antreibt.

Figur 1A zeigt den Fahrzeugsitz 3 mit dem montierten herkömmlichen, manuell betätigbaren Lehnenversteller 1' nach dem Stand der Technik.

Figur 1B zeigt das Sitzteil 3.1 ohne montierte Sitzlehne 3.2, aber mit dem montierten, elektrisch betriebenen Lehnenversteller 1".

Figur 1C zeigt die Sitzlehne 3.2, die an dem Sitzteil 3.1 mit dem bereits montierten, elektrisch betriebenen Lehnenversteller 1" zu montieren ist.

Der elektrisch betriebene Lehnenversteller 1" kann als eine vorgefertigte Montageeinheit M an dem Fahrzeugsitz 3, insbesondere an dem Sitzteil 3.1, wie in Figur 1C gezeigt, montiert werden. Die Montageeinheit M des elektrisch betriebenen Lehnenverstellers 1" umfasst beidseitig eines lehnenfesten Rohres 5.1 jeweils ein Beschlagoberteil B1 und ein Beschlagunterteil B2, zwischen denen jeweils einer der Drehbeschläge 2' angeordnet ist, die mittels der Übertragungsstange 5 miteinander gekoppelt sind. Das Rohr 5.1 dient dabei als Umhüllung für die Übertragungsstange 5.

Auf einer der Beschlagseiten ist außen am betreffenden Beschlagunterteil B2 die elektrische Antriebseinheit 6 auf der Übertragungsstange 5 angeordnet.

Die elektrische Antriebseinheit 6 ist zumindest als ein Elektromotor ausgebildet, welcher die Übertragungsstange 5 direkt antreibt.

Die fertig montierte und vorgefertigte Montageeinheit M des elektrisch betriebenen Lehnenverstellers 1" ist in Figur 1D gezeigt.

Figur 1E zeigt den Fahrzeugsitz 3 mit am Sitzteil 3.1 montierter vorgefertigter Montageeinheit M des elektrisch betriebenen Lehnenverstellers 1" und montierter Sitzlehne 3.2.

Wie in den Teilfiguren 1B, 1D und 1E gezeigt, kann die Übertragungsstange 5 von einem Rohr 5.1 umgeben sein, das mit Halteelementen 4, insbesondere Halterungen für einen Kindersitz, versehen ist.

Mittels einer solchen vorgefertigten Montageeinheit M des elektrisch betriebenen Lehnenverstellers 1" ist eine Nachrüstung an einem bereits vorhandenen Fahrzeugsitz 3 durch einfache Demontage der Sitzlehne 3.2 und Austausch des manuell betätigbaren Lehnenverstellers 1' durch die Montageinheit M des elektrisch betriebenen Lehnenverstellers 1" und Wiedermontage der Sitzlehne 3.2 am Sitzteil 3.1 möglich.

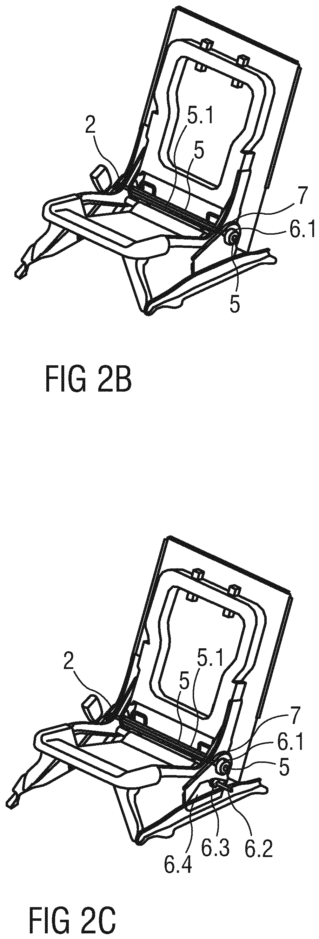

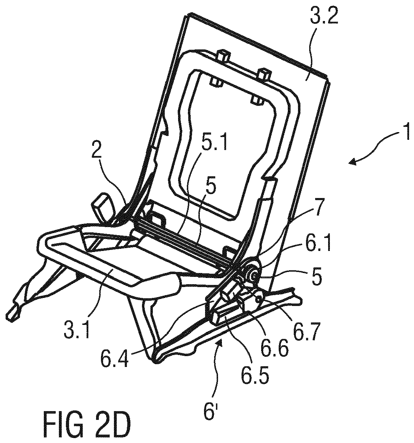

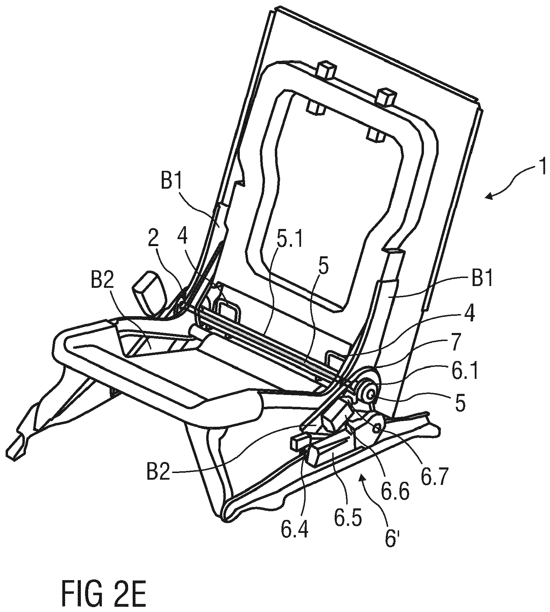

Figur 2 zeigt ein alternatives Ausführungsbeispiel für einen einseitig elektrisch betriebenen Lehnenversteller 1. Die Figur 2 umfasst die Teilfiguren 2A bis 2E, welche ein Ablaufdiagramm zur Nachrüstung oder Montage des alternativen Lehnenverstellers 1 mit einer alternativen elektrischen Antriebseinheit 6 am Fahrzeugsitz 3 zeigen.

Teilfigur 2A zeigt einen herkömmlichen Fahrzeugsitz 3 mit dem Lehnenversteller 1. Der Lehnenversteller 1 umfasst auf einer der Außenseiten einen als Rastbeschlag ausgebildeten Beschlag 2 zum lösbaren Verriegeln von Sitzteil 3.1 und Sitzlehne 3.2 sowie für eine Neigungsverstellung und ein Freischwenken der Sitzlehne 3.2 relativ zum Sitzteil 3.1. Auf der gegenüberliegenden Seite umfasst der elektrisch betriebene Lehnenversteller 1 ein Drehlager 7. Das Drehlager 7 und der Beschlag 2 sind mittels der Übertragungsstange 5 miteinander drehbar gekoppelt. Beidseitig des Fahrzeugsitzes 3 sind auf den Beschlagseiten jeweils ein Beschlagoberteil B1 und ein Beschlagunterteil B2 angeordnet. Zur elektrischen Verstellung der Sitzlehne 3.2 ist drehlagerseitig auf dem zugehörigen Beschlagunterteil B2 die elektrische Antriebseinheit 6 anordenbar, insbesondere montierbar oder nachrüstbar.

Die elektrische Antriebseinheit 6' nach Figuren 2B bis 2E umfasst eine Betätigungseinheit 6.1, eine am Beschlagunterteil B2 angeordnete Antriebswelle 6.2 inklusive Ritzel 6.3, ein am Beschlagunterteil B2 angeordnetes Gehäuseteil 6.4, insbesondere einen Deckel, einen Motor 6.5, insbesondere einen Elektromotor, einen Aktuator 6.6 und ein Schaltelement 6.7. Die elektrische Antriebseinheit 6' ist im zusammengebauten Zustand mit allen Komponenten in der Teilfigur 2E gezeigt.

Der Beschlag 2, das Drehlager 7 und die zugehörigen Beschlagoberteile B1 und Beschlagunterteile B2 sowie die Übertragungsstange 5 und das diese umgebende Rohr 5.1 sind bereits am Fahrzeugsitz 3 montiert und sind Gleichteile, welche sowohl für einen manuell betätigbaren als auch für einen elektrisch betriebenen Lehnenversteller 1' bzw. 1 verwendet werden können.

Zur Nachrüstung oder Montage der elektrischen Antriebseinheit 6' am Lehnenversteller 1 werden folgende Schritte ausgeführt:

Figur 2B zeigt die Montage der Betätigungseinheit 6.1 zur Betätigung, insbesondere Ver- und Entriegeln des Beschlags 2, die außen am drehlagerseitigen Beschlagunterteil B2 auf der Außenseite des Fahrzeugsitzes 3, auf welcher das Drehlager 7 angeordnet ist, befestigt ist. Die Betätigungseinheit 6.1 ist dabei derart ausgebildet, dass diese bei Betätigung die Übertragungsstange 5 dreht, so dass der auf der gegenüberliegenden Außenseite des Fahrzeugsitzes 3 angeordnete Beschlag 2 geöffnet wird.

Anschließend wird, wie in Figur 2C dargestellt, innenseitig am Beschlagunterteil B2 ein Gehäuseteil 6.4, insbesondere ein Deckel für die elektrische Antriebseinheit 6' angeordnet. Darüber hinaus wird die Antriebswelle 6.2 inklusive Ritzel 6.3 am Beschlagunterteil B2 montiert.

Figur 2D zeigt die Montage weiterer Komponenten der elektrischen Antriebseinheit 6' außen am Beschlagunterteil B2, nämlich die Montage eines Motors 6.5, insbesondere eines Elektromotors, eines Aktuators 6.6, insbesondere eines Antriebsstellers, eines Schaltelements 6.7, insbesondere eines Mikroschalters oder eines Stellungsgebers.

Figur 2D zeigt den am Fahrzeugsitz 3 fertig montierten, elektrisch betriebenen Lehnenversteller 1 mit der elektrischen Antriebseinheit 6'.

Anstelle einer Montage der einzelnen Komponenten der elektrischen Antriebseinheit 6' am Fahrzeugsitz 3 kann die elektrische Antriebseinheit 6' als eine Montageeinheit M vorgefertigt und am Fahrzeugsitz 1 angeordnet werden.

Hierzu werden beispielsweise zunächst die zwei Beschlagoberteile B1 und die diese verbindende Übertragungsstange 5 miteinander montiert. Anschließend wird der Beschlag 2 an einer der Beschlagseiten auf einem aus dem betreffenden Beschlagoberteil B1 hinausragenden Ende der Übertragungsstange 5 aufgesetzt und montiert, insbesondere mittels einer Rast-/Schnappverbindung befestigt. In einem nachfolgenden Schritt werden die Beschlagunterteile B2 auf die aus dem Beschlag 2 bzw. dem Drehlager 7 hinausragenden Enden der Übertragungsstange 5 aufgesetzt und montiert. In einem weiteren Schritt wird eine Betätigungseinheit 6.1 außen auf der drehlagerseitigen Beschlagseite dem Beschlagunterteil B2 aufgesetzt und montiert. Darüber hinaus wird auf diesem drehlagerseitigen Beschlagunterteil B2 eine Antriebswelle 6.2 mit einem Ritzel 6.3 montiert. In einem weiteren Schritt wird dann die elektrische Antriebseinheit 6' außen an diesem betreffenden drehlagerseitigen Beschlagunterteil B2 angeordnet und befestigt. Dabei werden insbesondere die zugehörigen Komponenten, wie der Motor 6.5, der Aktuator 6.6, das Schaltelement 6.7 montiert und befestigt.

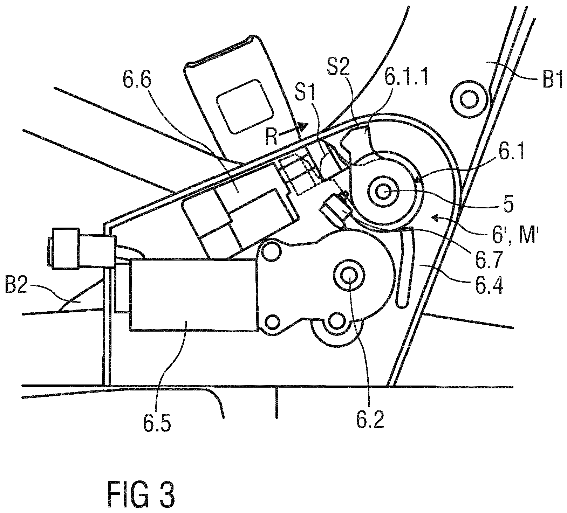

Figur 3 zeigt schematisch ein Ausführungsbeispiel für eine elektrische Antriebseinheit 6', welche als eine alternative Montageeinheit M' drehlagerseitig am Fahrzeugsitz 3 montiert oder nachgerüstet werden kann.

Dazu umfasst die elektrische Antriebseinheit 6' zumindest das innere Gehäuseteil 6.4, das außen am Beschlagunterteil B2 des Lehnenverstellers 1 angeordnet ist. Ein äußeres Gehäuseteil, insbesondere ein Deckel, welches auf das innere Gehäuseteil 6.4 zum Schutz der Komponenten der elektrischen Antriebseinheit 6' anordenbar ist, ist zur besseren Übersicht nicht dargestellt.

Im Gehäuse und somit am inneren Gehäuseteil 6.4 sind die Komponenten, wie die Betätigungseinheit 6.1, die Antriebswelle 6.2 inklusive Ritzel 6.3, der Motor 6.5, insbesondere ein Elektromotor, der Aktuator 6.6 und das Schaltelement 6.7, angeordnet.

Die Betätigungseinheit 6.1, die auf der Übertragungsstange 5 form- und/oder kraftschlüssig angeordnet ist, umfasst ein Hebelelement 6.1.1. Das Hebelelement 6.1.1 ist zwischen einer ersten Stellung S1, in welcher der gegenüberliegende Beschlag 2 verriegelt ist, und einer zweiten Stellung S2, in welcher der Beschlag 2 geöffnet ist, verstellbar.

Zum Öffnen des Beschlags 2 wird ein nicht näher dargestelltes Betätigungselement, z. B. eine Taste im Kofferraum oder in einer Fahrzeugtür, betätigt. Über ein nicht dargestelltes Steuergerät wird daraus resultierend der Aktuator 6.6 betätigt und fährt in Richtung R aus, so dass das Hebelelement 6.1.1 von der ersten Stellung S1 in die zweite Stellung S2 bewegt wird und der Beschlag 2 geöffnet wird und offen bleibt.

Der Aktuator 6.6 fährt entgegen Richtung R zurück in eine eingefahrene Position.

Das beispielsweise als ein Mikroschalter oder Stellungsgeber ausgebildete Schaltelement 6.7 ermittelt anhand der Position des Hebelelements 6.1.1, dass der Beschlag 2 geöffnet ist und gibt ein Steuersignal an den Motor 6.5 aus, so dass dieser aktiviert wird, so dass die Antriebswelle 6.2 sich dreht.

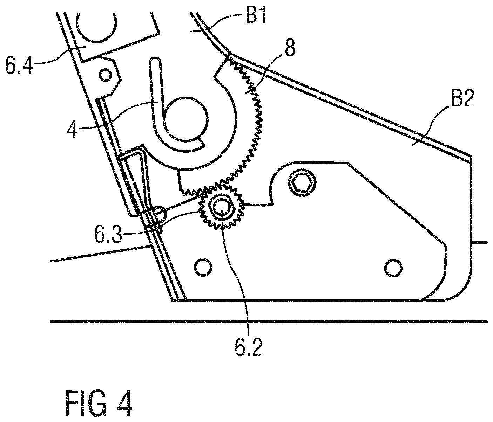

Figur 4 zeigt die Komponenten des Lehnenverstellers 1 auf der Drehlagerseite von innen. Die vom Motor 6.5 angetriebene Antriebswelle 6.2 dreht das auf dieser angeordnete Ritzel 6.3, welches wiederum ein lehnenfestes Anschlagselement 8 antreibt, so dass aufgrund des geöffneten Beschlages 2 die Sitzlehne 3.2 geschwenkt wird.

Das Ritzel 6.3 weist dabei eine Außenverzahnung auf, die mit einer Außenverzahnung des Anschlagselements 8 korrespondiert. Das Ritzel 6.3 und das Anschlagselement 8 bilden eine Zahnradpaarung. Alternativ können diese eine andere geeignete Getriebeverbindung aufweisen und beispielsweise als ein Planetenradgetriebe ausgebildet sein.

Das Anschlagselement 8 ist mit dem Beschlagoberteil B1 fest verbunden, z. B. geschweißt.

Das Anschlagselement 8 ist drehfest mit der Übertragungsstange 5 gekoppelt, so dass die Drehbewegung auf die Übertragungsstange 5 und den gegenüberliegenden Beschlag 2 übertragen wird, bis die Sitzlehne 3.2 eine Schwenkposition erreicht hat, in welcher der Beschlag 2 verriegelt und ein Weiterschwenken der Sitzlehne 3.2 gestoppt wird.

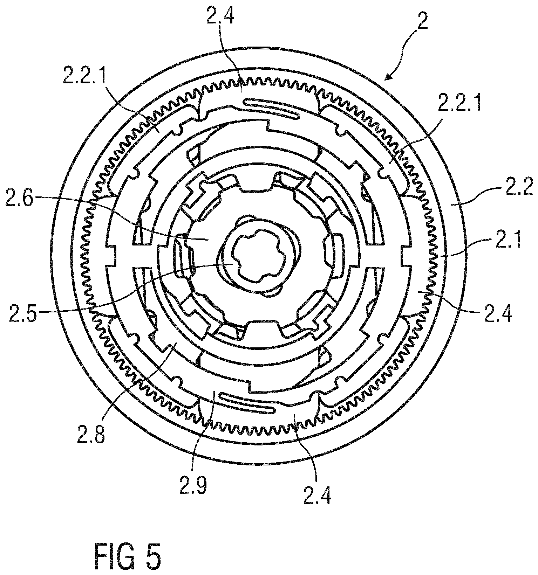

Figur 5 zeigt schematisch ein Ausführungsbeispiel für einen als Rastbeschlag ausgebildeten Beschlag 2 in Draufsicht. Dabei kann es sich um einen herkömmlichen Rastbeschlag handeln.

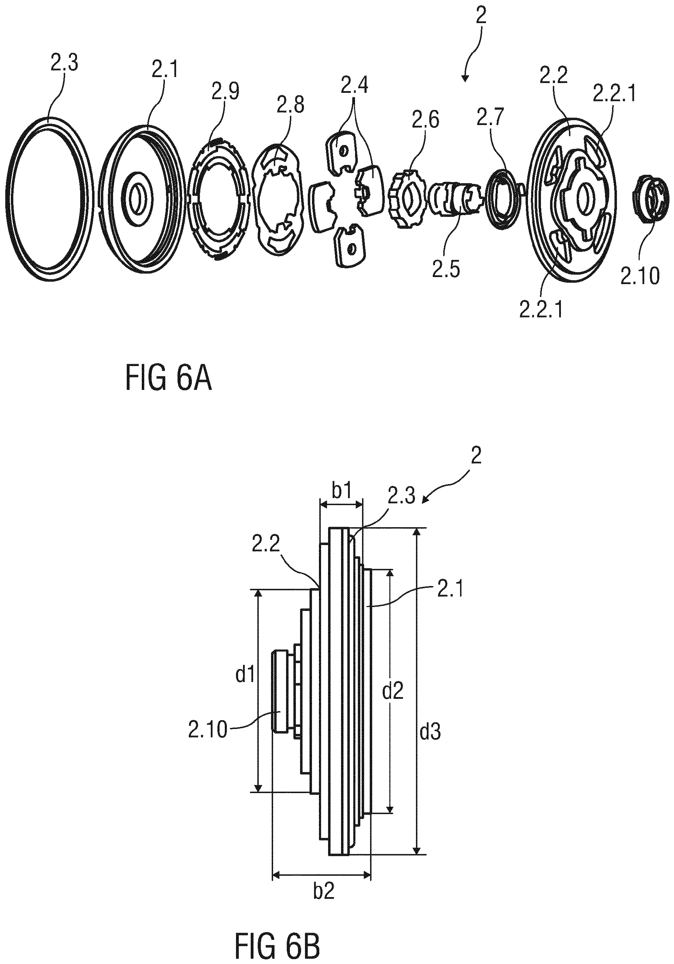

Figuren 6A und 6B zeigen eine mögliche Ausführungsform für einen als Rastbeschlag ausgebildeten Beschlag 2 in Explosionsdarstellung bzw. in perspektivischer Darstellung im zusammengebauten Zustand.

Der Beschlag 2 weist ein erstes, insbesondere als Zahnkranz ausgebildetes Beschlagteil 2.1 und ein zweites, insbesondere als Zahnkranz ausgebildetes Beschlagteil 2.2 auf, welches relativ zum ersten Beschlagteil 2.1 um eine Achse verdrehbar ist. Darüber hinaus weist der Beschlag einen beaufschlagbaren und um die Achse drehbar gelagerten Exzenter und mehrere Riegel 2.4 auf, welche vom zweiten Beschlagteil 2.2 mittels Führungssegmenten 2.2.1 in bezüglich der Achse radialer Richtung geführt, vom Exzenter beaufschlagt radial nach außen bewegbar sind und welche zum Verriegeln des Beschlags 2 mittels einer Verzahnung radial außen mit dem Zahnkranz des ersten Beschlagteils zusammenwirken.

Das erste Beschlagteil 2.1 ist beispielsweise fest mit der Struktur der Sitzlehne 3.2, insbesondere dem Beschlagoberteil B1, verbunden und somit lehnenfest. Das zweite Beschlagteil 2.2 ist fest mit der Struktur des Sitzteils 3.1, insbesondere dem Beschlagunterteil B2, verbunden und somit sitzteilfest. Die Zuordnungen der Beschlagteile 2.1 und 2.2 können auch vertauscht sein, d.h. das erste Beschlagteil 2.1 ist sitzteilfest und das zweite Beschlagteil 2.2 ist lehnenfest.

Zur Aufnahme der axial wirkenden Kräfte und zum Zusammenhalt der Beschlagteile 2.1, 2.2 ist ein Umklammerungsring 2.3 vorgesehen.

Im Zentrum des Beschlags 2 zwischen den Beschlagteilen 2.1, 2.2 ist ein Mitnehmer 2.5 angeordnet. Auf dem Mitnehmer 2.5 ist drehfest oder wenigstens auf eine Mitnahme gekoppelt ein Exzenter 2.6 angeordnet. Eine Federanordnung 2.7, insbesondere eine Spiralfeder, ist in einer zentralen Aufnahme eines der Beschlagteile 2.1, 2.2, vorliegend des zweiten Beschlagteils 2.2, angeordnet. Die Federanordnung 2.7 beaufschlagt den Exzenter 2.6 vorliegend, indem sie innen drehfest auf dem Mitnehmer 2.5 sitzt.

Der von der Federanordnung 2.7 beaufschlagte Exzenter 2.6 wirkt auf die radial beweglichen Riegel 2.4 ein und beaufschlagt diese, so dass sie radial nach außen gedrückt werden, um in den Zahnkranz einzufallen, womit der Beschlag 2 verriegelt ist.

Eine Steuerscheibe 2.8 ist im Bauraum axial zwischen den Riegeln 2.4 und dem ersten Beschlagteil 2.1 angeordnet und sitzt vorliegend drehfest auf dem Exzenter 2.6.

Optional weist der Beschlag 2 ein ringförmiges Freischwenk-Steuerelement 2.9 zum Beispiel zur Stellung der Sitzlehne 3.2 in eine nicht zum Sitzgebrauch geeignete, freigeschwenkte Stellung und ein Sicherungselement 2.10 zur Aufnahme des Übertragungselements 5 auf.

Die Komponenten des Beschlags 2 weisen dabei übliche Abmessungen, insbesondere Durchmesser d1 bis d3 von beispielsweise 50 mm bis 80 mm und Breiten b1 bis b2 (Tiefe des Beschlags 2) von ca. 8, insbesondere 10 mm bis ca. 30 mm, insbesondere 25 mm, auf.

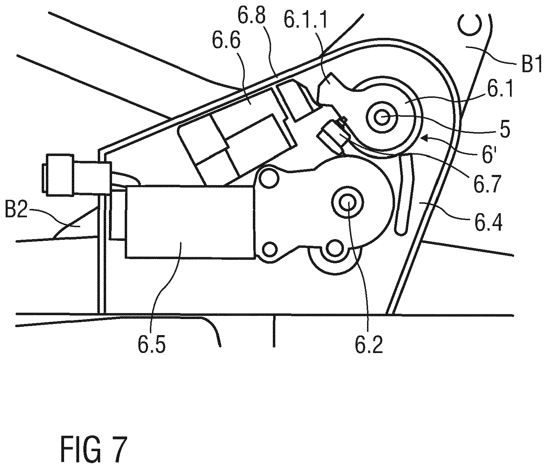

Figur 7 zeigt schematisch ein Ausführungsbeispiel für eine Anordnung der elektrischen Antriebseinheit 6' des Lehnenverstellers 1 nach Figur 2 in einem Gehäuse, mit einem am Beschlagunterteil B2 angeordneten inneren Gehäuseteil 6.4 und einem transparent dargestellten äußeren Gehäuseteil 6.8. Zwischen diesen Gehäuseteilen 6.4 und 6.8 sind die Komponenten der elektrischen Antriebseinheit 6' geschützt angeordnet. Das äußere Gehäuseteil 6.8 kann dabei derart ausgebildet sein, dass dieses als Beschlagblende für den Lehnenversteller 1 auf der Drehlagerseite dient.

### Bezugszeichenliste

- 1,1": elektrisch betriebener Lehnenversteller
- 1': manuell betätigbarer Lehnenversteller
- 2: Beschlag
- 2': Drehbeschlag
- 2.1: erstes Beschlagteil
- 2.2: zweites Beschlagteil
- 2.2.1: Führungssegment
- 2.3: Umklammerungsring
- 2.4: Riegel
- 2.5: Mitnehmer
- 2.6: Exzenter
- 2.7: Federanordnung
- 2.8: Steuerscheibe
- 2.9: Freischwenk-Steuerelement
- 2.10: Sicherungselement
- 3: Fahrzeugsitz
- 3.1: Sitzteil
- 3.2: Sitzlehne
- 4: Halteelement
- 5: Übertragungsstange
- 5.1: Übertragungsrohr
- 6, 6': elektrische Antriebseinheit
- 6.1: Betätigungseinheit
- 6.1.1: Hebelelement
- 6.2: Antriebswelle
- 6.3: Ritzel
- 6.4: Gehäuseteil (inneres)
- 6.5: Motor
- 6.6: Aktuator
- 6.7: Schaltelement
- 6.8: Gehäuseteil (äußeres)
- 7: Drehlager
- 8: Anschlagelement

- B1: Beschlagoberteil
- B2: Beschlagunterteil
- b1, b2: Breite
- d1 bis d3: Durchmesser
- M,M': Montageeinheit
- R: Richtung
- RT: Rahmenteil
- S1: erste Stellung
- S2: zweite Stellung

## Patentansprüche

1. Fahrzeugsitz (3) mit einem elektrisch betriebenen Lehnenversteller (1, 1"), mit einem Sitzteil (3.1) und einer relativ zum Sitzteil (3.1) verstellbaren Sitzlehne (3.2), umfassend zwei Beschlagseiten,
- von denen jede ein sitzlehnenfestes Beschlagoberteil (B1) und ein sitzteilfestes Beschlagunterteil (B2) umfasst, und
- von denen zumindest eine einen Beschlag (2, 2') zur Neigungsverstellung der Sitzlehne (3.2) umfasst,
wobei der Beschlag (2, 2') zwischen dem Beschlagoberteil (B1) und dem Beschlagunterteil (B2) angeordnet ist und die Beschlagseiten mittels einer Übertragungsstange (5) miteinander gekoppelt sind, wobei auf einer der Beschlagseiten eine elektrische Antriebseinheit (6, 6') vorgesehen ist, die außen am zugehörigen Beschlagunterteil (B2) angeordnet ist und mit der Übertragungsstange (5) zum Antrieb dieser gekoppelt ist, **dadurch gekennzeichnet, dass** außen am Beschlagunterteil (B2) der antriebsseitigen Beschlagseite ein Aktuator (6.6) angeordnet ist, der mit einer Betätigungseinheit (6.1) zur Entriegelung oder Verriegelung des Beschlags (2, 2') im Wirkzusammenhang steht.

2. Fahrzeugsitz (3) nach Anspruch 1, wobei das Beschlagunterteil (B2) der antriebsseitigen Beschlagseite derart ausgebildet ist, dass dieses zumindest ein Teil eines Gehäuses für die elektrische Antriebseinheit (6, 6') bildet.

3. Fahrzeugsitz (3) nach Anspruch 1 oder 2,
wobei die Betätigungseinheit (6.1) als ein Hebelelement (6.1.1) ausgebildet ist.

4. Fahrzeugsitz (3) nach Anspruch 3, wobei am Beschlagunterteil (B2) der antriebsseitigen Beschlagseite ein Schaltelement (6.7), insbesondere ein Mikroschalter oder ein Stellungsgeber, angeordnet ist, der mit dem Hebelelement (6.1.1) zur Bestimmung dessen Position im Wirkzusammenhang steht.

5. Fahrzeugsitz (3) nach einem der vorhergehenden Ansprüche,
wobei die elektrische Antriebseinheit (6, 6') eine Antriebswelle (6.2) mit einem Ritzel (6.3) umfasst, welches in Eingriff mit einem Anschlagselement (8) steht, das drehfest mit dem Beschlagoberteil (B1) und der Übertragungsstange (5) verbunden ist.

6. Fahrzeugsitz (3) nach einem der vorhergehenden Ansprüche,
wobei das jeweilige Beschlagunterteil (B2) derart ausgebildet ist, dass dieses an einer bodenfesten Komponente des Sitzteils (3.1) und/oder an einem Unterbau form-, kraft- und/oder stoffschlüssig befestigt ist.

7. Fahrzeugsitz (3) nach einem der vorhergehenden Ansprüche,
wobei das jeweilige Beschlagoberteil (B1) derart ausgebildet ist, dass dieses an einer Rahmenstruktur oder einem Rahmenteil (RT) der Sitzlehne (3.2) form-, kraft- und/oder stoffschlüssig befestigt ist.

8. Fahrzeugsitz (3) nach einem der vorhergehenden Ansprüche,
**gekennzeichnet durch** eine vorgefertigte Montageeinheit (M, M'), die zumindest die im Patentanspruch 1 aufgeführten Komponenten umfasst.

9. Verfahren zur Montage eines elektrisch betriebenen Lehnenverstellers (1, 1") in einem Fahrzeugsitz (3) nach einem der vorhergehenden Ansprüche, umfassend folgende Schritte:
- Zusammenbau der zwei Beschlagoberteile (B1) und der diese verbindende Übertragungsstange (5),
- Aufsetzen und Befestigen des zumindest einen Beschlages (2, 2') auf einem aus dem betreffenden Beschlagoberteil (B1) hinausragenden Ende der Übertragungsstange (5),
- Aufsetzen und drehbare Anordnung der Beschlagunterteile (B2) auf die aus den Beschlägen (2, 2') hinausragenden Enden der Übertragungsstange (5),
- Aufsetzen und Befestigen einer Betätigungseinheit (6.1) außen auf einer der Beschlagseiten an einem Beschlagunterteil (B2),
- Montieren einer Antriebswelle (6.2) mit einem Ritzel (6.3) an diesem Beschlagunterteil (B2),
- Montieren und Befestigen einer elektrischen Antriebseinheit (6, 6') außen am betreffenden Beschlagunterteil (B2), insbesondere Montieren und Befestigen der zugehörigen Komponenten, wie eines Motors (6.5), eines Aktuators (6.6), eines Schaltelements (6.7).

## Claims

1. Vehicle seat (3) with an electrically operated backrest adjuster (1, 1"), with a seat part (3.1) and a backrest (3.2) which is adjustable relative to the seat part (3.1), comprising two fitting sides
- of which each comprises a fitting upper part (B1), which is fixed on the backrest, and a fitted lower part (B2), which is fixed on the seat part, and
- of which at least one comprises a fitting (2, 2') for adjusting the inclination of the backrest (3.2), wherein the fitting (2, 2') is arranged between the fitting upper part (B1) and the fitting lower part (B2), and the fitting sides are coupled to each other by means of a transmission rod (5),
wherein an electric drive unit (6, 6') is provided on one of the fitting sides, said electric drive unit being arranged on the outside of the associated fitting lower part (B2) and being coupled to the transmission rod (5) for driving same, **characterized in that** an actuator (6.6) is arranged on the outside of the fitting lower part (B2) of the drive-side fitting side, said actuator being operatively connected to an actuating unit (6.1) for unlocking or locking the fitting (2, 2').

2. Vehicle seat (3) according to Claim 1,
wherein the fitting lower part (B2) of the drive-side fitting side is designed in such a manner that said fitting lower part forms at least part of a housing for the electric drive unit (6, 6').

3. Vehicle seat (3) according to Claim 1 or 2,
wherein the actuating unit (6.1) is configured as a lever element (6.1.1).

4. Vehicle seat (3) according to Claim 3,
wherein a switching element (6.7), in particular a microswitch or a position indicator, is arranged on the fitting lower part (B2) of the drive-side fitting side, said switching element being operatively connected to the lever element (6.1.1) in order to determine the position thereof.

5. Vehicle seat (3) according to one of the preceding claims,
wherein the electric drive unit (6, 6') comprises a driveshaft (6.2) with a pinion (6.3) which is in engagement with a stop element (8) which is connected to the fitting upper part (B1) and the transmission rod (5) for rotation thereof.

6. Vehicle seat (3) according to one of the preceding claims,
wherein the respective fitting lower part (B2) is designed in such a manner that said fitting lower part is fastened to a component, which is fixed on the floor, of the seat part (3.1) and/or to a substructure in an form-fit connecting, force-fit connecting and/or integrally bonded manner.

7. Vehicle seat (3) according to one of the preceding claims,
wherein the respective fitting upper part (B1) is designed in such a manner that said fitting upper part is fastened to a frame structure or to a frame part (RT) of the backrest (3.2) in an form-fit connecting, force-fit connecting and/or integrally bonded manner.

8. Vehicle seat (3) according to one of the preceding claims,
**characterized by** a premanufactured installation unit (M, M') which comprises at least the components listed in Patent Claim 1.

9. Method for installing an electrically operated backrest adjuster (1, 1") in a vehicle seat (3) according to one of the preceding claims,
comprising the following steps:
- fitting together the two fitting upper parts (B1) and the transmission rod (5) connecting same,
- placing and fastening the at least one fitting (2, 2') on an end of the transmission rod (5) that projects out of the fitting upper part (B1) concerned,
- placing and rotatably arranging the fitting lower parts (B2) onto those ends of the transmission rod (5) which project out of the fittings (2, 2'),
- placing and fastening an actuating unit (6.1) on a fitting lower part (B2) on the outside of one of the fitting sides,
- mounting a driveshaft (6.2) with a pinion (6.3) on said fitting lower part (B2),
- mounting and fastening an electric drive unit (6, 6') on the outside of the fitting lower part (B2) concerned, in particular mounting and fastening the associated components, such as a motor (6.5), an actuator (6.6), a switching element (6.7).

## Revendications

1. Siège de véhicule (3) comprenant un organe de réglage de dossier (1, 1") à commande électrique, comprenant une partie d'assise (3.1) et un dossier de siège (3.2) qui peut être positionné par rapport à la partie d'assise (3.1), comportant deux côtés de ferrure,
- parmi lesquels chacun comporte une partie supérieure de ferrure (B1) fixe sur le dossier de siège et une partie inférieure de ferrure (B2) fixe sur la partie d'assise, et
- parmi lesquels au moins l'un comporte une ferrure (2, 2') servant à régler l'inclinaison du dossier de siège (3.2),
la ferrure (2, 2') étant disposée entre la partie supérieure de ferrure (B1) et la partie inférieure de ferrure (B2) et les côtés de ferrure étant accouplés l'un à l'autre au moyen d'une tige de transmission (5), une unité d'entraînement (6, 6') électrique se trouvant sur l'un des côtés de ferrure, laquelle est disposée à l'extérieur sur la partie inférieure de ferrure (B2) correspondante et est couplée à la tige de transmission (5) pour entraîner celle-ci,
**caractérisé en ce que**
un actionneur (6.6) est disposé à l'extérieur sur la partie inférieure de ferrure (B2), lequel se trouve en relation fonctionnelle avec une unité d'actionnement (6.1) servant à déverrouiller ou à verrouiller la ferrure (2, 2') .

2. Siège de véhicule (3) selon la revendication 1, la partie inférieure de ferrure (B2) du côté de ferrure côté entraînement étant configurée de telle sorte que celle-ci forme au moins une partie d'un boîtier pour l'unité d'entraînement (6, 6') électrique.

3. Siège de véhicule (3) selon la revendication 1 ou 2, l'unité d'actionnement (6.1) étant réalisée sous la forme d'un élément levier (6.1.1).

4. Siège de véhicule (3) selon la revendication 3, un élément de commutation (6.7), notamment un microrupteur ou un transmetteur de position étant disposé au niveau de la partie inférieure de ferrure (B2) du côté de ferrure côté entraînement, lequel se trouve en relation fonctionnelle avec l'élément levier (6.1.1) en vue de déterminer sa position.

5. Siège de véhicule (3) selon l'une des revendications précédentes, l'unité d'entraînement (6, 6') électrique comportant un arbre d'entraînement (6.2) muni d'un pignon (6.3), lequel se trouve en prise avec un élément de butée (8) qui est relié en rotation solidaire avec la partie supérieure de ferrure (B1) et la tige de transmission (5).

6. Siège de véhicule (3) selon l'une des revendications précédentes, la partie inférieure de ferrure (B2) respective étant configurée de telle sorte que celle-ci est fixée par complémentarité de formes, par force et/ou par fusion de matières à un composant fixe au sol de la partie d'assise (3.1) et/ou à un châssis.

7. Siège de véhicule (3) selon l'une des revendications précédentes, la partie supérieure de ferrure (B1) respective étant configurée de telle sorte que celle-ci est fixée par complémentarité de formes, par force et/ou par fusion de matières à une structure de cadre ou à une partie de cadre (RT) du dossier de siège (3.2).

8. Siège de véhicule (3) selon l'une des revendications précédentes, **caractérisé par** une unité de montage (M, M') préfabriquée qui comporte au moins les composants mentionnés dans la revendication 1.

9. Procédé de montage d'un organe de réglage de dossier (1, 1") à commande électrique dans un siège de véhicule (3) selon l'une des revendications précédentes, comprenant les étapes suivantes :
- assemblage des deux parties supérieures de ferrure (B1) et de la tige de transmission (5) qui les relie,
- pose et fixation de l'au moins une ferrure (2, 2') sur une extrémité de la tige de transmission (5) qui fait saillie hors de la partie supérieure de ferrure (B1) concernée,
- pose et arrangement à rotation de la partie inférieure de ferrure (B2) sur les extrémités de la tige de transmission (5) qui font saillie hors des ferrures (2, 2'),
- pose et fixation d'une unité d'actionnement (6.1) à l'extérieur sur l'un des côtés de ferrure au niveau d'une partie inférieure de ferrure (B2),
- montage d'un arbre d'entraînement (6.2) muni d'un pignon (6.3) au niveau de cette partie inférieure de ferrure (B2),
- montage et fixation d'une unité d'entraînement (6, 6') électrique à l'extérieur au niveau de la partie inférieure de ferrure (B2) concernée, notamment montage et fixation des composants associés, comme d'un moteur (6.5), d'un actionneur (6.6), d'un élément de commutation (6.7).
